# NEUE EUROPÄISCHE PATENTSCHRIFT

(11) **EP 0 894 903 B2**
(45) Veröffentlichungstag und Bekanntmachung des Hinweises auf die Entscheidung über den Einspruch: **06.07.2005**
(45) Hinweis auf die Patenterteilung: 28.11.2001
(21) Anmeldenummer: 98114220.1
(22) Anmeldetag: 29.07.1998
(51) Int. Cl.: E03C 1/05

(54) **Kalt-/Warmwasser-Mischbatterie für Waschtische, Wasch- und Spülbecken, Handwaschbecken, Duschen, Wannen u. dgl.**
Hot/cold mixing armature for sinks, showers, cocks and the like
Mitigeur chaud/froids pour les éviers, les douches, les robinets et similaires

(30) Priorität: 30.07.1997 DE 29713601 U
(43) Veröffentlichungstag der Anmeldung: 03.02.1999
(73) Patentinhaber: Lotz, Henner, 60433 Frankfurt /Main (DE)
(72) Erfinder: Lotz, Henner, 60433 Frankfurt /Main (DE)
(74) Vertreter: Körner, Ekkehard, Dipl.-Ing.

(56) Entgegenhaltungen:
- EP-A- 0 061 837
- EP-A- 0 882 848
- EP-B- 0 242 675
- WO-A-87/05352
- DE-U- 1 936 305
- DE-U- 7 106 330
- DE-U- 8 900 375
- DE-U- 9 206 349
- US-A- 5 358 213

## Beschreibung

Die Erfindung bezieht sich auf eine Einhebel-Kalt-/Warmwasser-Mischbatterie für Waschtische, Wasch- und Spülbecken, Handwaschbecken, Duschen, Wannen und dergleichen, bestehend aus einem Gehäuse mit einer Wasserauslauföffnung, einer in dem Gehäuse angeordneten Mischkartusche mit zwei Eingängen für Kalt- bzw. Warmwasser und einem Auslaß für Armatur-Mischwasser, der mit der Wasserauslauföffnung verbunden ist, einer Stelleinrichtung zur Beeinflussung des Mischungsverhältnisses von Kalt- und Warmwasser sowie des Mengenstroms, und einem in dem Gehäuse befindlichen Elektromagnetventil das im Wasserweg durch die Mischbatterie angeordnet ist. Eine Mischbatterie dieser Art ist aus US-A-5 358 213 bekannt.

Diese Armaturen sind für Sanitäranlagen und Küchen als Zweigriff- und Einhebel-Mischbatterien allgemein bekannt.

In öffentlichen Toiletten für ein breites Publikum sind an Handwaschbecken häufig Wasserspender installiert, die ohne manuell zugängliche Betätigungseinrichtungen, wie Hebel oder Drehhähne, ausgestattet sind. Die Wasserabgabe wird bei ihnen durch einen Annäherungssensor gesteuert, der auf Elektromagnetventile einwirkt, die in den Zuleitungen von Kalt- und Warmwasser oder einer Zuleitung für Objekt-Mischwasser bzw. Kaltwasser angeordnet sind. Das Mischungsverhaltnis von Kalt- und Warmwasser und die Gesamtdurchflußmenge wird bei diesen bekannten Anlagen mit Hilfe ein oder zweier Drehventile eingestellt, die in den Zuleitungen von Kalt- und Warm- bzw. Mischwasser angeordnet sind und durch ohnehin vorhandene Eckventile realisiert sein können.

US-A-5 358 213 beschreibt eine Einhebel-Waschtisch-Mischbatterie mit Kalt- und Warmwasserzulauf und einem Auslauf sowie einer Mischkartusche, mit der durch Schwenken eines Einstellhebels um die Achse der Mischkartusche die Wassertemperatur des Mischwassers eingestellt werden kann. In der Kartusche befindet sich ein Kolbenschieber, der gegen die Kraft einer Schraubenschließfeder durch einen Elektromagneten in eine Öffnungsstellung bewegt werden kann, in der er eine Verbindung zwischen den Kalt- und Warmwassereinlässen einer Mischkammer in der Kartusche und einem Mischwasserauslaß aus der Mischkammer schafft. Der Kolbenschieber kann ferner durch Anheben des Einstellhebels gegen die Kraft der genannten Schließfeder in die Öffnungsstellung bewegt werden. Bei Loslassen des Einstellhebels und bei Abschalten der Stromversorgung des Elektromagneten führt die Schließfeder den Kolbenschieber in die Schließstellung zurück. Die Strömungsmenge kann bei elektrischem Betrieb des Kolbenschiebers nicht eingestellt werden, und auch bei Handbetrieb ist eine solche Einstellung schwierig, da der Einstellhebel gegen die Kraft der Schließfeder in einem relativ labilen Gleichgewicht gehalten werden muß.

Aus EP-A-0 061 837 ist eine durch einen Ultraschalisensor gesteuerte Waschtisch-Mischbatterie bekannt, die getrennte Handeinstellventile in Warm- und Kaltwasserzulauf hat und ein Elektromagnetventil im Mischwasserauslauf aufweist. Bei dieser Mischbattene kann der Benutzer im voraus nicht erkennen, auf welche Temperatur und Strömungsmenge das Mischwasser eingestellt ist. Er erfährt dieses erst, wenn er seine Hände unter den Wasserauslauf in den Erfassungsbereich des Ultraschallsensors hält, was unter Umständen zu unangenehmen Überraschungen führt.

Aus der WO-A-87/05352 ist ein automatisch steuerbares Zusatzgerät bekannt, das am Wasserauslaß einer gewöhnlichen Wasserzapfstelle anbringbar ist, um die Wasserabgabe elektrisch steuern zu können Über das Mischen von Warm- und Kaltwasser ist nichts ausgesagt, da sich der Gegenstand der Druckschrift nicht an diesen Problemkreis wendet.

DE-U-92 06 349 beschreibt eine Mischarmatur für einen Waschtisch mit Kalt- und Warmwasserzuläufen, in denen sich jeweils ein Absperrhahn befindet, mit denen Mengenströme und daher Auslauftemperatur eingestellt werden können, und mit einem Auslaßventil, das über einen Drahtzug mechanisch mit einem Fußhebel verbunden ist, um die Wasserabgabe handberührungsfrei aus- und einzuschalten Diese Armatur ist in ihrer Wirkung der nach EP-A-0 061 837 und den Erfahrungen für den Benutzer vollkommen vergleichbar.

EP 0 882 848 A2, die zum Stand der Technik gemäß Art. 54, Abs. 3 und 4 EPÜ gehört, beschreibt eine Wasserauslaufventilanordnung mit einem Gehäuse, einer darin angeordneten, von einem Handgriff betätigbaren Mischkartusche für Kalt- und Warmwasser, die auch eine Einstellung des Mengenstroms zuläßt, und einem Elektromagnetventil, das stromabwärts des Mischwasserauslasses der Mischkartusche angeordnet und von einer elektrischen Steuereinrichtung gesteuert ist. Die Steuereinrichtung erhält Eingaben von einem an dem Handgriff angeordneten Berührungsschalter, der bei einer Betätigung des Handgriffs in die Öffnungsstellung der Mischkartusche die Steuereinrichtung aktiviert, und von einer Detektionseinrichtung, die ebenfalls von dem Berührungsschalter aktiviert wird. Im aktivierten Zustand emittiert die Detektionseinrichtung Infrarotlichtstrahlen, die von der Hand des sich waschenden Benutzers reflektiert und von ihr wieder aufgenommen werden. Die daraufhin von der Detektionseinrichtung abgegebenen Signale werden von der Steuereinrichtung aufgenommen. Darin wird ein Zeitgeber gestartet, der für eine vorgegebene Zeitdauer das Elektromagnetventil im geoffneten Zustand hält. Läuft diese Zeitdauer ab und befindet sich kein die Infrarotstrahlen reflektierendes Objekt im Erfassungsbereich der Detektionseinrichtung, schließt die Steuereinrichtung das Elektromagnetventil. Diese Wasserauslaufventilanordnung ist somit durch das Zusammenwirken einer Handgriffbetätigung und einer berührungslos arbeitenden Detektoreinrichtung, die eine gemeinsame Steuereinrichtung mit Erfassungssignalen für die Auswertung versorgen, gekennzeichnet.

DE-U-71 06 330 beschreibt eine Vorrichtung zur berührungslosen Wasserauslaufsteuerung für Handwasch- und Duschzwecke, bestehend aus einem Wandeinbaugehäuse mit einer Mischkartusche, einem Wasserauslauf und einem Elektromagnetventil zwischen der Mischkartusche und dem Wasserauslauf. Die Mischkartusche ist vorzugsweise eine Thermostatmischkartusche und weist einen aus der Frontplatte des Wandeinbaugehäuses vorstehenden Drehknopf auf, an dem die Temperatur des Mischwassers eingestellt werden kann. Das Elektromagnetventil ist mittels einer Ultraschall-Sende- und -Empfangsanlage gesteuert, von der der Sendewandler und der Empfangswandler an der Frontplatte des Wandeinbaugehäuses angebracht sind. Eine Möglichkeit, den Mengenstrom des Wassers einzustellen, besteht nicht. Es ist lediglich Ein-/Aus-Betrieb möglich.

DE-U-1 936 305 beschreibt ein Elektromagnetventil für sanitare Haushaltinstallationen, das mit Netz- oder Batteriespannung wahlweise über einen Fußschalter oder einen am Wasserauslauf angebrachten Tastschalter, etwa durch Gegenhalten eines Bechers, betätigbar ist. Das Elektromagnetventil ist in den Wasserauslauf eingebaut. Zur Anpassung an den Leitungsdruck ist eine Drosseleinrichtung vorgesehen. Ansonsten ist keine für den gewöhnlichen Benutzer zugängliche Einrichtung vorgesehen, mit der der Mengenstrom des von dem Elektromagnetventil freigegebenen Wasserauslaufs nach den persönlichen Wünschen eingestellt werden kann.

Aus DE-U-89 00 375 ist eine Sanitärarmatur für Wasserhähne bekannt, die ein Mischventil und ein diesem nachgeschaltetes Absperrventil enthält, das von einem durch einen Sensor steuerbaren Elektromagneten betätigbar ist, der unter einer Haube untergebracht ist, die außen an das Gehäuse der Armatur angesetzt ist und vergleichbar einem Drehknopf von diesem weg steht. Das Mischventil besteht aus einem Mischkörper, der verdrehbar in einem Sammelraum angeordnet ist, der in dem Gehäuse der Armatur eingearbeiteten und an die Warmwasserleitung und an die Kaltwasserleitung angeschlossen ist. Der Mischkörper ist mit einer Steueröffnung zur Einstellung des Wasser-Mischungsverhältnisses versehen und kann von außen mittels eines Drehknopfes verstellt werden. In dem Mischventil ist ein Mengenventil integriert, mit dem der Volumenstrom beeinflußt werden kann. Das Mengenventil ist mittels einer Einstellscheibe verstellbar, die an der Stirnseite des genannten Drehknopfes angeordnet ist. Es sind somit für die Verstellung des Mischungsverhältnisses und für die Verstellung des Volumenstroms zwei unterschiedliche manuelle Einstellorgane vorhanden.

Die Erfindung geht von der Erfahrung aus, daß auch im häuslichen Bereich wie auch im Hotel-Badezimmer zuviel wertvolles Wasser verschwendet wird, insbesondere beim Händewaschen und beispielsweise bei der Nassrasur, je nach den persönlichen Gewohnheiten Sie möchte hier wirkungsvoll Abhilfe schaffen, einen Beitrag zum nachhaltigen Umweltschutz leistengleichzeitig dem Benutzer aber ein Höchstmaß an Komfort erhalten.

Der Erfindung liegt nun die Aufgabe zugrunde, eine Mischbattene der eingangs erwähnten Art anzugeben, die einerseits für eine sichere Wasser- und Energieeinsparung sorgt, andererseits aber dem Benutzer individuelle und sichere Einstell- und Benutzungsmöglichkeiten bietet, und die dabei einfach aufgebaut ist.

Diese Aufgabe wird durch die im Anspruch 1 und 2 angegebenen Merkmale gelöst. Vorteilhafte Ausgestattungen der Erfindung sind Gegenstand der Unteransprüche.

Anders als bei bekannten Anlagen, die zwei Elektromagnetventile, nämlich in Kalt- und Warmwasserzulauf erforderten, ist bei der Erfindung nur ein einziges Elektromagnetventil vorgesehen, das sich in der Verbindung zwischen Wasserauslaß der Mischvorrichtung (z B Kartusche) und Wasserauslauföffnung des Armaturgehäuses befindet. Dieses Elektromagnetventil ist sensor- oder schalter-gesteuert, so daß sichergestellt ist, daß der Wasserfluß unterbrochen ist, wenn sich kein Benutzer im Bereich der Armatur befindet. Ein versehentliches oder absichtliches Offenlassen des Absperrorgans der Armatur ist somit nicht möglich.

Bei einer Weiterbildung der Erfindung kann die Einstellmöglichkeit von Wassermenge, und Wassertemperatur auf einen privilegierten Personenkreis beschränkt werden, indem die Handstelleinrichtung innerhalb des Gehäuses angeordnet und von einer abnehm- und absperrbaren Kappe oder Klappe überdeckt ist. Durch Schlüssel, Werkzeug oder dgl. kann diese Kappe oder Klappe gegen unbefugtes Abnehmen gesichert werden.

Um dem Bediener eine möglichst komfortable und sichere Bedienung zu ermöglichen, ist die elektronische Steuerung so ausgelegt, daß nach Wahl mittels der Stelleinrichtung für Wassertemperatur (kalt, warm, gemischt) und Durchflußmenge der Wasserfluß durch das Elektromagnetventil, sei es selbsttätig über die Sensorik oder durch den Bediener über eine Schaltvornchtung, individuell beeinflußt werden kann. Diese Bedienmodi - individuell/manuell bzw. automatisch - können ggf wechselnd schaltbar sein.

Zur Sicherstellung der Energieversorgung, die für den Betneb benötigt wird, kann bei einer für Netzbetrieb ausgelegten Steuerung eine Batterie angeschlossen sein, die bei Ausfall der Netzspannung einen Weiterbetrieb für einen gewissen Zeitraum gewährleistet.

Die Erfindung wird nachfolgend unter der Bezugnahme auf in den Zeichnungen dargestellte Ausführungsbeispiele näher erläutert:

Es zeigt
Fig 1 eine erfindungsgemäße Armatur, hier Waschtisch-Mischbatterie, mit Stellorgan, hier Bedienungshebel, und eingebautem Annäherungssensor,
Fig 2 eine erfindungsgemäße Armatur, hier Waschtisch-Mischbatterie, mit Schalter, hier Fußschalter, und
Fig 3 eine erfindungsgemäße Armatur, hier Waschtisch-Mischbatterie, mit Annäherungssensor und durch Kappe abgedecktem Handstellorgan.

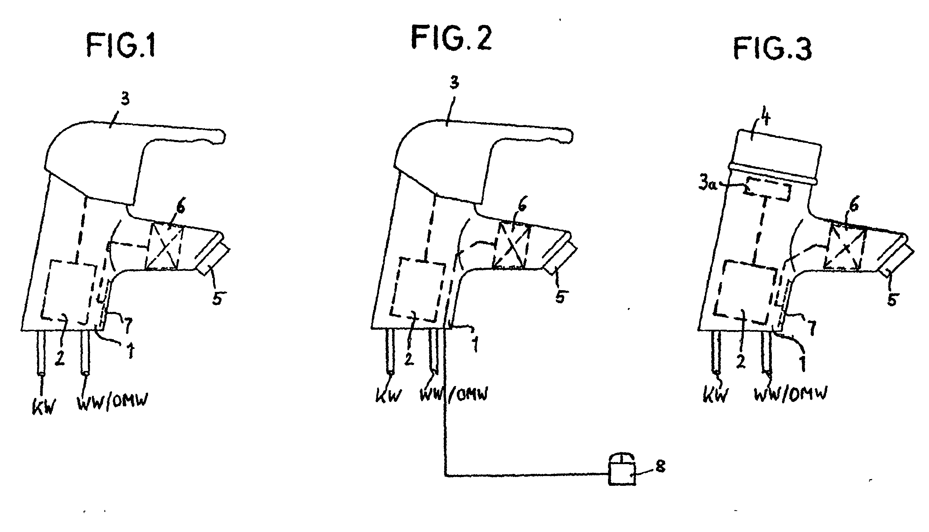

Die Armatur, hier Waschtisch-Mischbatterie, gemäß den Fig 1 bis 3 umfaßt ein Gehäuse, wie z B mit 1 dargestellt, in dem eine Mischkartusche 2 angeordnet ist. Auf das Gehäuse 1 ist bei den Ausführungsformen nach Fig 1 und 2 als Handstelleinrichtung ein Bedienelement 3, im dargestellten Beispiel ein Hebelgriff, aufgesetzt, das mit der Mischkartusche 2 gekuppelt ist. Durch Auf- und Abschwenken und durch Rechts- und Linksdrehen dieses Bedienelements 3 lassen sich Menge und Temperatur des am Auslauf 5 austretenden Wassers beeinflussen.

Bei der Ausführungsform nach Fig. 3 befindet sich ein Handstellorgan 3a innerhalb des Gehäuses 1 und ist von einer abnehmbaren Kappe 4 überdeckt. Bedieser Ausführungsform lassen sich die Einstellungen beispielsweise durch Ziehen und Drücken des Handstellorgans 3a sowie durch Drehen desselben vornehmen.

An der Unterseite des Gehäuses 1 münden in dieses Kaltwasser- und Warmwasserzuleitungen KW bzw. WW. Anstelle von Warmwasser kann auch Objekt-Mischwasser zugeführt werden, was durch das Symbol OMW verdeutlicht ist. Die Zufuhrung erfolgt über übliche Eckventile, die hier nicht dargestellt sind. Im Gehäuse 1 sind diese Wasserzuleitungen mit Einlässen (nicht dargestellt) an der Mischkartusche 2 verbunden Zwischen dem Mischwasserauslaß der Mischkartusche 2 und der Wasserauslauföffnung 5 des Gehäuses 1 befindet sich im Gehäuse 1 ein Elektromagnetventil 6.

Bei den Ausführungsformen nach Fig. 1 und 3 befindet sich auf der Seite der Wasserauslauföffnung 5 im Gehäuse 1 ein Sensor 7, der in einer Gehauseöffnung sitzt oder durch eine Gehauseöffnung von außen zugänglich ist und der ein Bewegungs- oder Annäherungssensor, insbesondere Infrarotsensor sein kann. Dieser Sensor steuert das Öffnen und Schließen des Elektromagnetventils 6 Die Wirkungsverbindung zwischen Sensor 7 und Elektromagnetventil 6 ist in den Fig. 1 und 3 durch eine gestrichelte Linie hervorgehoben.

Der Sensor kann auch an einer Stelle angebracht sein, um z.B. Behinderten die Benutzung der Sensorsteuerung zu ermöglichen.

Bei der Ausführungsform nach Fig. 2 ist das Elektromagnetventil 6 über einen Schalter 8 steuerbar, der im dargestellten Beispiel als Fußtaster ausgebildet ist, ebensogut aber auch ein Handtaster (durch Druck- oder Berührung bedient) sein kann und dann beispielsweise über ein Zeitrelais oder eine Zeitschaltung (nicht dargestellt) auf das Elektromagnetventil 6 wirkt.

Der Steuenmpuls fur das Elektromagnetventil 6 kann auch von einer Hausmanagement-Zentralsteuerung über eine Schnittstelle an der Steuerelektronik eingegeben werden.

Es sei angemerkt, daß die Mischkartusche im Gehäuse 1 nur über eine Stelleinrichtung einstellbar und zwischen den Wasserzuleitungen (Kalt,- Warm-, Objekt-Mischwasser) und dem Elektromagnetventil 6 angeordnet ist. Wesentlich ist, daß nur ein einziges Magnetventil 6 vorhanden ist, das sich im Armatur-Mischwasserstrom befindet.

Weiterhin sei darauf hingewiesen, daß die Erfindung auch für Wasserauslässe bei Duschanlagen geeignet ist. Bei diesen wird die Wasserauslauföffnung von einem Duschkopf gebildet.

Bei der Elektronik, die von dem Annäherungssensor gesteuert wird, lassen sich vorteilhafte Weiterbildungen realisieren. So kann die Sensonmpulsfrequenz in Abhängigkeit von der Umgebungshelligkeit beeinflußt werden, um den Stromverbrauch zu reduzieren. An der Schnittstelle für ein Hausmanagementsystem lassen sich vorteilhaft Daten eingeben, mit denen eine Wassermenge bestimmt wird, beispielsweise um eine Badewanne zu füllen. Hierfür ist eine Datenerfassung uber einen Durchflußmengenzahler erforderlich, der in der Armatur integriert oder gesondert im Leitungssystem angeordnet sein kann.

## Patentansprüche

1. Einhebel-Kalt-/Warmwasser-Mischbatterie für Waschtische, Wasch- und Spülbekken, Handwaschbecken, Duschen, Wannen und dergleichen, bestehend aus einem Gehäuse (1) mit einer Wasserauslauföffnung (5), einer in dem Gehäuse (1) angeordneten Mischkartusche (2) mit zwei Eingängen für Kalt-'bzw. Warmwasser und einem Auslaß für Armatur-Mischwasser, der mit der Wasserauslauföffnung verbunden ist, einer Stelleinrichtung (3; 3a) zur Beeinflussung des Mischungsverhältnisses von Kalt- und Warmwasser sowie des Mengenstroms, und einem in dem Gehäuse (1) befindlichen Elektromagnetventil (6) das im Wasserweg durch die Mischbatterie angeordnet ist, **dadurch gekennzeichnet, daß** das Elektromagnetventil (6) zwischen dem Auslaß der Mischkartusche (2) und der Wasserauslauföffnung (5) angeordnet ist und ein mit dem Elektromagnetventil (6) verbundener Sensor (7) zum Zuführen eines Stellsignals zu dem Elektromagnetventil (6) in dem Gehäuse (1) hinter oder in einer Gehäuseöffnung untergebracht ist.

2. Einhebel-Kalt-/Warmwasser-Mischbatterie für Waschtische, Wasch- und Spülbekken, Handwaschbecken, Duschen, Wannen und dergleichen, bestehend aus einem Gehäuse (1) mit einer Wasserauslauföffnung (5), einer in dem Gehäuse (1) angeordneten Mischkartusche (2) mit zwei Eingängen für Kalt- bzw. Warmwasser und einem Auslaß für Armatur-Mischwasser, der mit der Wasserauslauföffnung verbunden ist, einer Stelleinrichtung (3; 3a) zur Beeinflussung des Mischungsverhältnisses von Kalt- und Warmwasser sowie des Mengenstroms, und einem in dem Gehäuse (1) befindlichen Elektromagnetventil (6) das im Wasserweg durch die Mischbatterie angeordnet ist, **dadurch gekennzeichnet, daß** das Elektromagnetventil (6) zwischen dem Auslaß der Mischkartusche (2) und der Wasserauslauföffnung (5) angeordnet ist und ein mit dem Elektromagnetventil (6) verbundener, mit Fuß oder Hand betätigbarer Schalter (8) zum Zuführen eines Stellsignals zu dem Elektromagnetventil (6) vorsehen ist.

3. Mischbatterie nach Anspruch 1, **dadurch gekennzeichnet, daß** der Sensor (7) ein Annäherungssensor ist.

4. Mischbatterie nach Anspruch 1, **dadurch gekennzeichnet, daß** der Sensor (7) ein Infrarot-, Ultraschall- oder Radarsensor ist.

5. Mischbatterie nach Anspruch 2, **dadurch gekennzeichnet, daß** der Schalter (8) ein kapazitiv wirkender Annäherungsschalter ist.

6. Mischbatterie nach Anspruch 1 oder 2 oder einem der davon abhängigen Ansprüche, **dadurch gekennzeichnet, daß** die Stelleinrichtung (3a) in dem Gehäuse (1) von einer abnehm- und absperrbaren Kappe (4) oder Klappe überdeckt ist.

7. Mischbatterie nach einem der vorhergehenden Ansprüche, **dadurch gekennzeichnet, daß** die mit dem Elektromagnetventil (6) verbundene Einrichtung (7, 8) eine Netzausfall-Batterie zur Notstromversorgung enthält.

## Claims

1. Single-lever hot/cold mixing armature for lavabos, wash basins, sinks, lavatory basins, showers, tubs and the like, comprising a housing (1) having a water outlet opening (5), a mixing cartridge (2) having two inlets for cold and hot water, respectively, and an outlet for armature mixed water, said outlet being connected to the water outlet opening, an adjustment means (3; 3a) for influencing the mixing ratio of cold and hot water and the flow quantity, and a solenoid (6) located within the housing (1) and arranged in the flow path extending through the mixing armature, **characterized in that** said solenoid (6) is arranged between the outlet of the mixing cartridge (2) and the water outlet opening (5), and a sensor (7) connected to the solenoid (6) for supplying an actuation signal to the solenoid (6) is disposed within said housing (1) behind or in a housing opening.

2. Single-lever hot/cold mixing armature for lavabos, wash basins, sinks, lavatory basins, showers, tubs and the like, comprising a housing (1) having a water outlet opening (5), a mixing cartridge (2) having two inlets for cold and hot water, respectively, and an outlet for armature mixed water, said outlet being connected to the water outlet opening, an adjustment means (3; 3a) for influencing the mixing ratio of cold and hot water and the flow quantity, and a solenoid (6) located within the housing (1) and arranged in the flow path extending through the mixing armature, **characterized in that** said solenoid (6) is arranged between the outlet of the mixing cartridge (2) and the water outlet opening (5), and a switch (8) is provided which is connected to the solenoid (6) and is operable by foot or hand for supplying an actuation signal to the solenoid (6).

3. A mixing armature as claimed in claim 1, **characterized in that** the sensor (7) is an approximation sensor.

4. A mixing armature as claimed in claim 1, **characterized in that** the sensor (7) is an infrared, ultrasonic or radar sensor.

5. A mixing armature as claimed in claim 2, **characterized in that** the switch (8) is a capacitively acting approximation switch.

6. A mixing armature as claimed in claim 1 or 2, **characterized in that** the adjustment means (3a) is covered in the housing (1) by a removable and lockable cap (4) or flap.

7. A mixing armature as claimed in one of the preceding claims, **characterized in that** the means (7, 8) connected to the solenoid (6) includes a mains power failure battery for emergency power supply.

## Revendications

1. Mitigeur eau chaude/eau froide à levier unique pour tables de toilette, lavabos et éviers, lave-mains, douches, baignoires et analogues, composé d'un corps (1) avec une ouverture de sortie d'eau (5), d'une cartouche de mélange (2) avec deux entrées pour l'eau froide et l'eau chaude et d'une sortie pour l'eau de mélange de la robinetterie reliée à l'ouverture de sortie d'eau, d'un dispositif de réglage (3;3a) pour influer sur le rapport de mélange d'eau froide et d'eau chaude, ainsi que sur le débit, et d'une soupape électromagnétique disposée dans le passage d'eau traversant le corps, **caractérisé en ce que** la soupape électromagnétique (6) est disposée entre la sortie de la cartouche de mélange (2) et l'ouverture de sortie d'eau (5) du corps (1), et un détecteur (7;8) relié à la soupape électromagnétique (6) pour transmettre un signal de réglage à la soupape électromagnétique (6) est logé dans le corps (1) derrière ou dans une ouverture du corps.

2. Mitigeur eau chaude/eau froide à levier unique pour tables de toilette, lavabos et éviers, lave-mains, douches, baignoires et analogues, composé d'un corps (1) avec une ouverture de sortie d'eau (5), d'une cartouche de mélange (2) avec deux entrées pour l'eau froide et l'eau chaude et d'une sortie pour l'eau de mélange de la robinetterie reliée à l'ouverture de sortie d'eau, d'un dispositif de réglage (3;3a) pour influer sur le rapport de mélange d'eau froide et d'eau chaude, ainsi que sur le débit, et d'une soupape électromagnétique disposée dans le passage d'eau traversant le corps, **caractérisé en ce que** la soupape électromagnétique (6) est disposée entre la sortie de la cartouche de mélange (2) et l'ouverture de sortie d'eau (5) du corps (1), et **en ce qu'**il y a un interrupteur (8) actionnable au pied ou à la main et relié à la soupape électromagnétique (6) pour transmettre un signal de réglage à la soupape électromagnétique (6).

3. Mitigeur suivant la revendication 1, **caractérisé en ce que** le détecteur (3) est un détecteur de proximité.

4. Mitigeur suivant la revendication 1, **caractérisé en ce que** le détecteur (7) est un détecteur infra-rouge, à ultrasons, ou radar.

5. Mitigeur suivant la revendication 2, **caractérisée en ce que** 1' interrupteur (8) est un initiateur d'approche à action capacitive.

6. Mitigeur suivant la revendication 1 ou 2, **caractérisé en ce que** le dispositif de réglage (3a) est recouvert dans le corps (1) par un capuchon (4) ou clapet amovible et verrouillable.

7. Mitigeur suivant l'une des revendications précédentes, **caractérisé en ce que** le dispositif (7,8) relié à la sou-pape électromagnétique (6) comporte une batterie de secours pour l'alimentation en courant.
